Europäisches Patentamt

European Patent Office

Office européen des brevets

(11) Veröffentlichungsnummer : **0 461 397 B1**

(12) **EUROPÄISCHE PATENTSCHRIFT**

(45) Veröffentlichungstag der Patentschrift :
**23.12.92 Patentblatt 92/52**

(51) Int. Cl.⁵ : **A01M 3/02**

(21) Anmeldenummer : **91107593.5**

(22) Anmeldetag : **10.05.91**

(54) Vorrichtung zum Fangen und Töten von Insekten.

(30) Priorität : **11.01.91 DE 4100593**
**13.06.90 DE 4018838**

(43) Veröffentlichungstag der Anmeldung :
**18.12.91 Patentblatt 91/51**

(45) Bekanntmachung des Hinweises auf die
Patenterteilung :
**23.12.92 Patentblatt 92/52**

(84) Benannte Vertragsstaaten :
**AT BE CH FR GB LI NL**

�()Entgegenhaltungen :
**FR-A- 533 116**

�


Entgegenhaltungen :
**US-A- 1 860 939**
**US-A- 2 902 793**
**US-A- 3 673 730**
**US-A- 4 793 094**

(73) Patentinhaber : **Lammers, Ulrich**
**Gronauer Strasse, 7**
**W-4440 Rheine (DE)**

(72) Erfinder : **Lammers, Ulrich**
**Gronauer Strasse, 7**
**W-4440 Rheine (DE)**

(74) Vertreter : **Schulze Horn, Stefan, Dipl.-Ing.**
**M.Sc.**
**Goldstrasse 36**
**W-4400 Münster (DE)**

**Beschreibung**

Die Erfindung betrifft eine Vorrichtung zum Fangen und Töten von Insekten wie Fliegen od. dgl., mit einem an einem Handgriff befestigten, gitterförmigen und eine randseitige Erhöhung aufweisenden Teller und einem einen handgriffseitigen Bereich des Tellers überdeckenden Aufnahmeteil zum Auffangen der Insekten.

Vorrichtungen der zuvor beschriebenen Art sind in ihrer einfachsten Form (ohne Aufnahmeteil) gemeinhin als Fliegenklatschen allgemein bekannt. Nachteilig an diesen bekannten Fliegenklatschen ist, daß die getöteten Insekten nach dem Entfernen der Fliegenklatsche von der Wand oder Decke auf den Fußboden oder auf Möbelstücke fallen und von dort wieder aufgesammelt werden müssen. Daher wurde eine Vorrichtung zum Fangen und Töten von Insekten entwickelt, die mit einem Aufnahmeteil versehen ist, um die getöteten Insekten unmittelbar nach dem Erschlagen aufzufangen (FR-A- 533 116). Diese bekannte Vorrichtung, von der die vorliegende Erfindung ausgeht, weist ferner eine randseitige Erhöhung des Tellers auf. Bei dieser Vorrichtung besteht das Aufnahmeteil aus einer über den Handgriff geführten und über den handgriffseitigen Teil des Tellers gestülpten und diesen Teil des Tellers vollständig umschließenden Auffangtasche, die in ihrer Gesamtheit etwa der Größe des Tellers entspricht. Dies verschlechtert die Handhabbarkeit der bekannten Vorrichtung. Weiterhin wird dadurch die eigentliche "Schlagfläche" des Tellers nicht unerheblich verkleinert. Auch gestaltet sich das Ausleeren und ggf. Reinigen der Auffangtasche als recht umständlich.

Der Erfindung liegt daher die Aufgabe zugrunde, die eingangs beschriebene und zuvor näher erläuterte Vorrichtung zum Fangen und Töten von Insekten wie Fliegen od. dgl. so auszugestalten und weiterzubilden, daß die vorerwähnten Nachteile vermieden werden und die Vorrichtung in ihrer Gesamtheit verbessert wird. Weiterhin ist eine einfach aufgebaute, leichte und preiswerte Ausführung erwünscht.

Gelöst wird diese Aufgabe erfindungsgemäß dadurch, daß der Aufnahmeteil den überdeckten Bereich des Tellers sowie am Tellerrand vorgesehene Aufnahmeerhöhungen und eine Platte umfaßt und daß die Platte im Bereich der Verbindung von Handgriff und Teller beweglich befestigt ist und in ihrer Ruhestellung einen spitzen Winkel zur Ebene des Tellers bildet.

Dabei ist es zunächst vorteilhaft, daß als Aufnahmeteil nicht mehr eine vollständige Auffangtasche als separates Bauteil dient, sondern nunmehr die "Tasche" aus zwei Seitenteilen besteht, von denen das eine von einem Bereich des Tellers und das andere von einer beweglichen Platte gebildet wird. Die Taschenform entsteht durch die bezüglich der Telleroberfläche schräge Anordnung der beweglichen Platte mit der Öffnung zur Tellermitte. Am Tellerrand vorgesehene Aufnahmeerhöhungen schließen die keilförmigen Spalte zwischen Teller und Platte und verhindern so zuverlässig ein Entweichen bzw. Herausfallen eines Insekts. Auch ist die Öffnung des Aufnahmeteils der erfindungsgemäßen Vorrichtung rechteckig und damit größer als die kreisabschnittförmige Öffnung der bekannten Auffangtasche.

Es ist leicht ersichtlich, daß die erfindungsgemäße Vorrichtung zum Fangen und Töten von Insekten aufgrund ihres einfachen Aufbaus nicht nur leicht herzustellen sondern auch - vor allem durch ihre einer "gewöhnlichen Fliegenklatsche" entsprechenden Abmessungen - besonders gut handhabbar ist.

In weiterer Ausgestaltung der Erfindung ist vorgesehen, daß der Teller in seinem mittleren Bereich wenigstens eine zusätzliche Erhöhung aufweist. Durch eine solche Ausgestaltung wird erreicht, daß das zu tötende Insekt nach einem Schlag mit der erfindungsgemäßen Vorrichtung nicht sofort zwischen Teller und Wand oder dergleichen zerquetscht, sondern zunächst lediglich verletzt oder betäubt wird. Anschließend fällt das leblose Insekt in den Aufnahmeteil, wo es durch Zusammendrücken von Teller und beweglicher Platte mittels Daumen und Zeigefinger leicht, schnell und sicher getötet werden kann. Auf diese Weise lassen sich Verschmutzungen durch zerquetschte Insekten auf Wänden, Tapeten, Möbeln etc. zuverlässig vermeiden. Weitere Ausführungsformen der Erfindung sind in den obhängigen Ansprüchen beschrieben.

Die vorgenannten sowie die beanspruchten und in den Ausführungsbeispielen beschriebenen, erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können, insbesondere sind sie auch unabhängig voneinander zur Lösung der Aufgabe oder zumindest einer Teilaufgabe vorteilhaft verwendbar.

Es gibt nun verschiedene Möglichkeiten, die Lehre der Erfindung auszugestalten und weiterzubilden, wozu einerseits auf die Unteransprüche und andererseits auf die nachfolgende Erläuterung eines bevorzugten Ausführungsbeispiels der erfindungsgemäßen Vorrichtung anhand der Zeichnung verwiesen wird. In der Zeichnung zeigt:

Fig. 1 eine Aufsicht auf eine mögliche Ausführungsform einer erfindungsgemäßen Vorrichtung zum Fangen und Töten von Insekten,

Fig. 2 eine Seitenansicht der Vorrichtung aus Fig. 1 in Richtung des Pfeils II und

Fig. 3 einen Vertikalschnitt durch die Vorrichtung aus Fig. 1 entlang der Linie III-III.

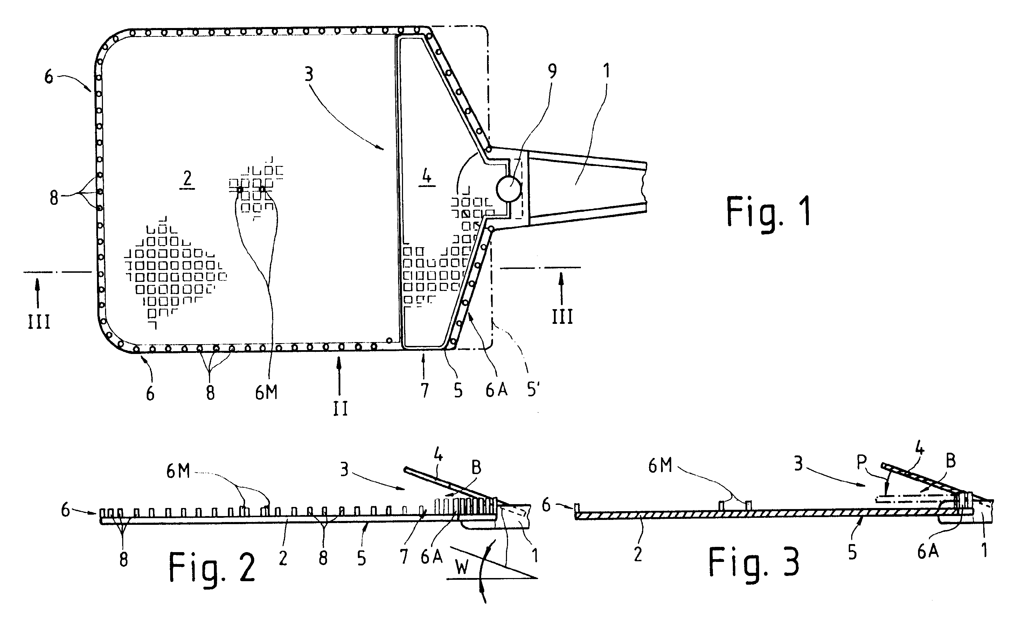

In Fig. 1 ist ein bevorzugtes Ausführungsbeispiel der erfindungsgemäßen Vorrichtung zum Fangen und Töten von Insekten wie Fliegen od. dgl. dargestellt. Die Vorrichtung besteht im wesentlichen aus einem Handgriff 1, einem gitterförmigen Teller 2 und einem Aufnahmeteil 3, welches durch eine Platte 4 und den von ihr überdeckten Bereich des Tellers 2 sowie auf dem Tellerrand 5 angeordneten Aufnahmeerhöhungen 6A gebildet wird. Desweiteren weist der Teller 2 eine umlaufende Erhöhung 6 auf. Wesentlich ist dabei, daß die Platte 4 im Bereich der Verbindung von Handgriff 1 und Teller 2 beweglich befestigt ist.

Fig. 2 zeigt den zuvor beschriebenen Gegenstand in einer Seitenansicht in Richtung des Pfeiles II in Fig. 1. Aus Fig. 2 geht deutlich hervor, daß die bewegliche Platte 4 in ihrer Ruhestellung einen spitzen Winkel W zur Ebene des Tellers 2 bildet. Fertigungstechnisch ist es besonders vorteilhaft, wenn die bewegliche Platte 4 aus elastischem Kunststoff besteht, so daß ihre Beweglichkeit durch ihr Material ermöglicht wird, während ihr befestigter Teil fest mit dem Handgriff 1 und/oder mit dem Teller 2 verbunden sein kann. Doch ist es auch denkbar (nicht dargestellt), eine starre Platte vorzusehen und diese mittels eines Scharniers oder dergleichen am Handgriff und/oder Teller zu befestigen. Dabei sollte eine Federbelastung für eine geöffnete Ruhestellung vorgesehen werden.

Nach einer weiteren Lehre der Erfindung ist auch die Platte 4 gitterförmig ausgebildet, wie auch in Fig. 1 angedeutet. Eine solche Ausführung ist für eine gleichmäßige Durchströmung der Tellerfläche mit Luft beim Schlagvorgang besonders zweckmäßig, da ansonsten eine quer zur Schlagrichtung verlaufende Luftströmung auftreten kann, welche das Insekt bei seinem Fluchtversuch unterstützt. Denkbar ist jedoch auch eine glattflächige Ausführung der Platte. Diese ist besonders vorteilhaft, falls stechende Insekten wie beispielsweise Wespen getötet werden sollen, damit ein Stechen durch die Platte sicher vermieden wird. Bei einer solchen nicht dargestellten Ausführungsform sollte zweckmäßigerweise ebenfalls der der Platte entsprechende Bereich des Tellers glattflächig ausgebildet werden.

Aus Fig. 1 geht ferner hervor, daß die bewegliche Platte 4 und der ihr entsprechende Bereich des Tellers 2 eine dreieckige Form aufweist. Bei einer solchen Ausgestaltung beginnt der jeweils von einer Aufnahmeerhöhung 6A zu schließende Spalt zwischen Tellerrand 5 und beweglicher Platte 4 im Bereich der Plattenbefestigung am Handgriff 1 und/oder Teller 2. In weiterer Ausgestaltung der Erfindung ist es jedoch auch möglich, die bewegliche Platte und den ihr entsprechenden Tellerbereich rechteckig auszubilden. Dabei verläuft der jeweils von einer Aufnahmeerhöhung 6A zu schließende Spalt zwischen Tellerrand 5′ und beweglicher Platte 4 erst im Bereich der beiden kürzeren Kanten der Platte 4, wie in Fig. 1 strichpunktiert angedeutet ist. Unabhängig von der gewählten Plattenform ist es stets erforderlich, daß die Aufnahmeerhöhungen 6A des Aufnahmeteils 3 in ihrer Höhe in etwa der Spaltbreite B zwischen dem Teller 2 und der beweglichen Platte 4 entsprechen, um ein ungewolltes Herausfallen von Insekten zu vermeiden.

Zum leichteren nachträglichen Aufnehmen eines getöteten Insekts von einer waagerechten Fläche, z.B. Tischplatte oder Fensterbank, ist nach einer weiteren Lehre der Erfindung im Bereich wenigstens einer Seite des Aufnahmeteils 3 eine etwa der Insektengröße entsprechende Öffnung 7 vorgesehen, wie aus den Figuren 1 und 2 hervorgeht. Bei einer symmetrischen Ausführung mit zwei einander gegenüberliegenden Öffnungen ergibt sich auch für Linkshänder eine einfache Handhabung, die der Betätigung einer Pinzette entspricht.

Wie weiter oben bereits erwähnt, ist es besonders vorteilhaft, die erfindungsgemäße Vorrichtung mit wenigstens einer zusätzlichen Erhöhung etwa in der Mitte des Tellers 2 zu versehen. Zwei solcher Erhöhungen 6M sind auch aus den Figuren 1 bis 3 ersichtlich, wobei in Figur 3 ein Schnitt entlang der Linie III-III aus Figur 1 dargestellt ist. Zweckmäßigerweise entsprechen diese Erhöhungen 6M der Höhe der randseitigen Erhöhung 6 des Tellers 2. Auf diese Weise wird sicher erreicht, daß auch bei kräftigeren Schlägen die Mitte des Tellers 2 (trotz randseitiger Erhöhung 6) nicht so nahe an die Wand oder dergl. gerät, daß ein sofortiges Zerquetschen des zu tötenden Insekts erfolgt und die entsprechende Stelle daher verschmutzt wird.

In Figur 3 ist ferner die Stellung der beweglichen Platte 4 nach ihrer Betätigung in Richtung des Pfeilers P strichpunktiert dargestellt.

Es ist nach einer weiteren Lehre der Erfindung von Vorteil, wenn die Erhöhungen 6 und 6M des Tellers 2 aus einzelnen, stabförmigen Erhebungen 8 bestehen. Auf diese Weise wird erreicht, daß der Teller 2 trotz "umlaufender" Erhöhung sehr leicht und biegsam bleibt, so daß mit der "randlosen" Seite auch auf Kanten geschlagen werden kann, ohne daß der Teller 2 in diesem Bereich einreißt, wie es bei einem umlaufenden Steg der Fall sein könnte. Für die erforderliche Biegsamkeit der gesamten Vorrichtung bestehen bevorzugt auch der Handgriff 1 und der Teller 2 aus Kunststoff.

Herstellungstechnisch ist es besonders günstig, wenn - wie im dargestellten und insoweit bevorzugten Ausführungsbeispiel angedeutet - Handgriff 1, Teller 2 und Platte 4 mittels derselben Befestigung 9, beispielsweise einer Punktverschweißung, miteinander verbunden sind. Denkbar ist aber auch, daß die bewegliche Platte lösbar mit dem Handgriff bzw. dem Teller verbunden ist. Eine solche nicht dargestellte Ausführungsform hat reinigungstechnische Vorteile, da das Zerquetschen der Insekten im Innern des Aufnahmeteils 3 stets eine Verschmutzung dieses Bereichs mit sich bringt.

Schließlich soll noch auf ein weiteres nicht dargestelltes Ausführungsbeispiel der erfindungsgemäßen Vorrichtung eingegangen werden, bei dem auch die Rückseite des Tellers mit einer randseitigen Erhöhung und einem Aufnahmeteil versehen ist. Bei einer solchen Ausführung ist es von besonderem Vorteil, wenn die Ausgestaltung bezüglich der Höhe der randseitigen Erhöhung des Tellers und dem Winkel zwischen der beweglichen Platte und der Tellerebene (oder aber bezüglich der Größe der Platte) auf beiden Tellerseiten unterschiedlich groß gewählt wird. Auf diese Weise ist eine Anpassung an die jeweilige Größe des zu tötenden Insekts möglich, um einerseits kleinere Insekten noch sicher zu beseitigen und andererseits die Gefahr von Verschmutzungen durch Zerquetschen größerer Insekten zu verringern.

Bezugszeichenliste:

| 1 | Handgriff |
| 2 | Teller |
| 3 | Aufnahmeteil |
| 4 | Platte |
| 5 | Tellerrand |
| 5′ | Tellerrand |
| 6 | randseitige Erhöhung |
| 6A | Aufnahmeerhöhung |
| 6M | mittige Erhöhung |
| 7 | Öffnung |
| 8 | Erhebung |
| 9 | Befestigung |
| B | Spaltbreite |
| P | Pfeil |
| W | Winkel |

**Patentansprüche**

1. Vorrichtung zum Fangen und Töten von Insekten wie Fliegen od. dgl., mit einem an einem Handgriff (1) befestigten, gitterförmigen und eine randseitige Erhöhung (6) aufweisenden Teller (2) und einem einen handgriffseitigen Bereich des Tellers (2) überdeckenden Aufnahmeteil (3) zum Auffangen der Insekten, dadurch gekennzeichnet, daß der Aufnahmeteil (3) den überdeckten Bereich des Tellers (2) sowie am Tellerrand (5) vorgesehene Aufnahmeerhöhungen (6A) und eine Platte (4) umfaßt und daß die Platte (4) im Bereich der Verbindung von Handgriff (1) und Teller (2) beweglich befestigt ist und in ihrer Ruhestellung einen spitzen Winkel (W) zur Ebene des Tellers (2) bildet.

2. Vorrichtung nach Anspruch 1, dadurch gekennzeichnet, daß die bewegliche Platte (4) aus elastischem Kunststoff gefertigt ist.

3. Vorrichtung nach Anspruch 1 oder 2, dadurch gekennzeichnet, daß die bewegliche Platte (4) gitterförmig ausgebildet ist.

4. Vorrichtung nach einem der Ansprüche 1 bis 3, dadurch gekennzeichnet, daß die bewegliche Platte (4) und der ihr entsprechende Bereich des Tellers (2) im wesentlichen eine dreieckige Form aufweist.

5. Vorrichtung nach einem der Ansprüche 1 bis 3, dadurch gekennzeichnet, daß die bewegliche Platte (4) und der ihr entsprechende Bereich des Tellers (2) im wesentlichen eine rechteckige Form aufweist.

6. Vorrichtung nach einem der Ansprüche 1 bis 5, dadurch gekennzeichnet, daß die Aufnahmeerhöhungen (6A) des Aufnahmeteils (3) in ihrer Höhe der Spaltbreite (B) zwischen dem Teller (2) und der beweglichen Platte (4) entsprechen.

7. Vorrichtung nach einem der Ansprüche 1 bis 6, dadurch gekennzeichnet, daß zum leichteren Aufnehmen eines getöteten Insekts von einer waagerechten Flächen im Bereich wenigstens einer Seite des Aufnahmeteils (3) eine etwa der Insektengröße entsprechende Öffnung (7) vorgesehen ist.

8. Vorrichtung nach einem der Ansprüche 1 bis 7, gekennzeichnet durch wenigstens eine zusätzliche Erhöhung (6M) im mittleren Bereich des Tellers (2).

9. Vorrichtung nach Anspruch 8, dadurch gekennzeichnet, daß die Höhe der mittigen Erhöhung/en (6M) der Höhe der randseitigen Erhöhung (6) des Tellers (2) entspricht.

10. Vorrichtung nach einem der Ansprüche 1 bis 9, dadurch gekennzeichnet, daß die Eerhöhungen (6 bzw. 6M) des Tellers (2) aus einzelnen stabförmigen Erhebungen (8) bestehen.

11. Vorrichtung nach einem der Ansprüche 1 bis 10, dadurch gekennzeichnet, daß der Handgriff (1) und der Teller (2) aus Kunststoff bestehen.

12. Vorrichtung nach einem der Ansprüche 1 bis 11, dadurch gekennzeichnet, daß Handgriff (1), Teller (2) und Platte (4) mittels derselben Befestigung (9) miteinander verbunden sind.

13. Vorrichtung nach einem der Ansprüche 1 bis 12, dadurch gekennzeichnet, daß die bewegliche Platte (4) lösbar mit dem Handgriff (1) bzw. mit dem Teller (2) verbunden ist.

14. Vorrichtung nach einem der Ansprüche 1 bis 13, dadurch gekennzeichnet, daß auch die Rückseite des Tellers (2) mit einer randseitigen Erhöhung (6) und einem Aufnahmeteil (3) versehen ist.

15. Vorrichtung nach Anspruch 14, dadurch gekennzeichnet, daß die Höhe der randseitigen Erhöhung (6) des Tellers (2) und der Winkel zischen der beweglichen Platte (4) und der Ebene des Tellers (2) auf beiden Seiten des Tellers (2) unterschiedlich groß ausgebildet sind.

## Claims

1. Apparatus for catching and killing insects such as flies and similiar species, with a lattice head (2) with a raised edge (6) and attached to a handle (1) and with a covered receptacle (3) for holding the insects at the edge next to the handle (1), characterized in that the receptacle (3) comprises the covered part of the head (2) as well as the raised parts (6A) provided at the edge of the head (2) and a plate (4) and in that the plate (4) is movably attached to the said apparatus in the area of the connection between the handle (1) and the head (2) and it forms, in its home position, an acute angle (W) to the plane of the head.

2. Apparatus according to claim 1, characterized in that the movable plate (4) is made of an elastic plastic.

3. Apparatus according to claim 1 or 2, characterized in that the movable plate (4) is composed of a lattice.

4. Apparatus according to one of the claims 1 to 3, characterized in that the movable plate (4) and the part of the head (2) corresponding to it form a more or less triangular shape.

5. Apparatus according to one of the claims 1 to 3, characterized in that the movable plate (4) and the part of the head (2) corresponding to it form a more or less rectangular shape.

6. Apparatus according to one of the claims 1 to 5, characterized in that the raised edges (6A) of the receptacle (3) correspond in their height with the width of the gap (B) between the head (2) and the movable plate (4).

7. Apparatus according to one of the claims 1 to 6, characterized in that an opening (7) about the size of an insect is provided along a horizontal plane on at least one side of the receptacle (7), in order to facilitate the accomodation of a dead insect.

8. Apparatus according to one of the claims 1 to 7, characterized in that at least one additional raised part (6M) is provided in the middle of the head (2).

9. Apparatus according to claim 8, characterized in that the height of the raised part in the centre (6M) corresponds with the height of the of the raised edge (6) of the head (2).

10. Apparatus according to one of the claims 1 to 9, characterized the raised parts (respectively 6 and 6A) of the head (2) comprise of a number of bar-shaped elevations.

11. Apparatus according to one of the claims 1 to 10, characterized in that the handle (1) and the head (2) are made of plastic.

12. Apparatus according to one of the claims 1 to 11, characterized in that the handle (1), the head (2) and the plate (4) are connected with one another by means of the same fixing device (9).

13. Apparatus according to one of the claims 1 to 12, characterized in that the movable plate (4) is separably attached to respectively the handle (1) and the head (2).

14. Apparatus according to one of the claims 1 to 13, characterized in that the reverse side of the head (2) is fitted with a raised edge (6) and a receptacle (3).

15. Apparatus according to claim 14, characterized in that the height of the raised edge (6) of the head (2) and the angle between the movable plate (4) and the surface of the head (2) is of a different size on each side of the head (2).

## Revendications

1. Dispositif pour capturer et tuer des insectes comme des mouches ou analogues comprenant un plateau (2) treillissé fixé sur une poignée (1) et présentant un bord relevé (5) et une partie de réception (3) recouvrant une zone côté poignée du plateau (2) et destinée à recueillir les insectes, caractérisé en ce que la partie de réception (3) comprend la zone recouverte du plateau (2) ainsi que des bossages de réception (6A) prévus sur le bord (5) du plateau et une plaque (4) et en ce que la plaque (4) est fixée de manière mobile dans la zone de la jonction avec la poignée (1) et avec le plateau (2) et forme dans sa position de repos un angle aigu (W) avec le plan du plateau (2).

2. Dispositif selon la revendication 1, caractérisé en ce que la plaque mobile (4) est fabriquée en matière plastique élastique.

3. Dispositif selon la revendication 1 ou 2, caractérisé en ce que la plaque mobile (4) est treillissée.

4. Dispositif selon l'une des revendications 1 à 3, caractérisé en ce que la plaque mobile (4) et la zone qui lui correspond du plateau (2) présentent une forme sensiblement triangulaire.

5. Dispositif selon l'une des revendications 1 à 3, caractérisé en ce que la plaque mobile (4) et la zone qui lui correspond du plateau (2) présentent une forme sensiblement rectangulaire.

6. Dispositif selon l'une des revendications 1 à 5, caractérisé en ce que les bossages de réception (6A) de la partie de réception (3) ont une hauteur qui correspond à la largeur B de la fente entre le plateau (2) et la plaque mobile (4).

7. Dispositif selon l'une des revendications 1 à 6, caractérisé en ce que pour ramasser plus facilement un insecte tué sur une surface horizontale, il est prévu dans la zone d'au moins un côté de la partie de réception (3), une ouverture (7) correspondant à peu près à la taille d'un insecte.

8. Dispositif selon l'une des revendications 1 à 7, caractérisé par au moins un bossage supplémentaire (6M) dans la zone centrale du plateau (2).

9. Dispositif selon la revendication 8, caractérisé en ce que la hauteur du (des) bossage(s) central (centraux) (6M) correspond à la hauteur du bord relevé (6) du plateau (2).

10. Dispositif selon l'une des revendications 1 à 9, caractérisé en ce que les bossages (6 et 6M) du plateau (2) sont constitués par des bossages (8) séparés en forme de barre.

11. Dispositif selon l'une des revendications 1 à 10, caractérisé en ce que la poignée (1) et le plateau (2) sont en matière plastique.

12. Dispositif selon l'une des revendications 1 à 11, caractérisé en ce que la poignée (1), le plateau (2) et la plaque (4) sont reliés entre eux au moyen de la même fixation (9).

13. Dispositif selon l'une des revendications 1 à 12, caractérisé en ce que la plaque mobile (4) est reliée de manière amovible à la poignée (1) et au plateau (2).

14. Dispositif selon l'une des revendications 1 à 13, caractérisé en ce que le côté arrière du plateau (2) est également muni d'un bord relevé (6) et d'une partie de réception (3).

15. Dispositif selon la revendication 14, caractérisé en ce que la hauteur du bord relevé (6) du plateau (2) et l'angle entre la plaque mobile (4) et le plan du plateau (2) ont des dimensions différentes sur les deux côtés du plateau (2).

EP 0 461 397 B1

Fig. 1

Fig. 2

Fig. 3